# EUROPEAN PATENT SPECIFICATION

(11) **EP 2 385 661 B1**
(45) Date of publication and mention of the grant of the patent: **23.10.2019**
(21) Application number: 10181441.6
(22) Date of filing: 31.07.2001
(51) Int. Cl.: H04L 12/58, H04W 12/06, H04L 29/06

(54) **Authentication in a mobile communications network**
Authentifizierung in einem Mobilkommunikationsnetzwerk
Authentification dans un réseau de communication mobile

(30) Priority: 03.08.2000 GB 0019110
(43) Date of publication of application: 09.11.2011
(62) Divisional of application: 01954127.5
(73) Proprietor: Orange, 75015 Paris (FR)
(72) Inventor: Green, Raymond, North Somerset, GS24 9XB (GB); Hayson, Timothy, North Somerset (GB); Hooker, Philip, Bath, BA1 7AA (GB)
(74) Representative: Cabinet Plasseraud

(56) References cited:
- EP-A- 0 915 630
- EP-A- 1 005 244
- WO-A-00/24218
- FR-A- 2 785 119
- US-A- 5 390 245

## Description

This invention relates to a method of authentication, in particular, but not exclusively, in a mobile communications network.

In a known conventional GSM (Global System for Mobile Communications) system, each mobile station, such as a mobile telephone handset, is provided with a SIM, which is inserted into the mobile station in order to allow the mobile station to receive service in a GSM network.

A typical SIM includes a microprocessor, memory elements including a permanent memory (e. g. ROM), a non-volatile rewritable memory (e.g. EEPROM) and a volatile rewritable memory (e.g. RAM), and contacts for forming the data transfer interface between the SIM and the mobile station.

EP1005244 discloses means for avoiding attacks from unauthorised base station or network to a user terminal. Said means comprise information which are incorporated in the authentication challenge (RAND) sent by an authorised authentication centre (AuC) to inform the user terminal (UT 1) of the encryption algorithms which are supported by the serving network (FRAND, FSRAND) and to enable the user terminal to verify the origin of the authentication challenge (IRAND, SRAND).

US5390245 disclose a bi-directional authentication check from a mobile to a base station in order to avoid a false authentication check.

WO0024218 disclose switching off a SIM card as a response to incorrect result to a challenge, in order to avoid the risk for someone to find out the correct code by massive attack.

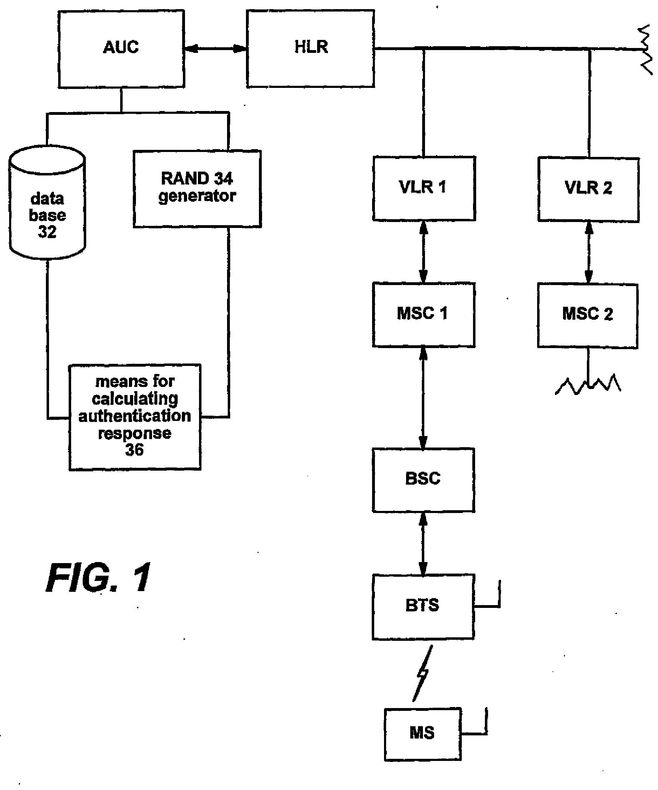

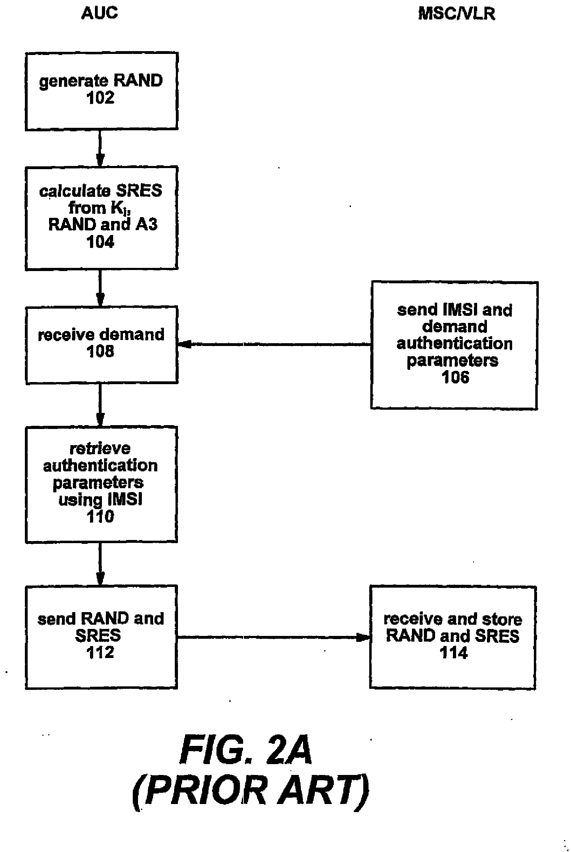

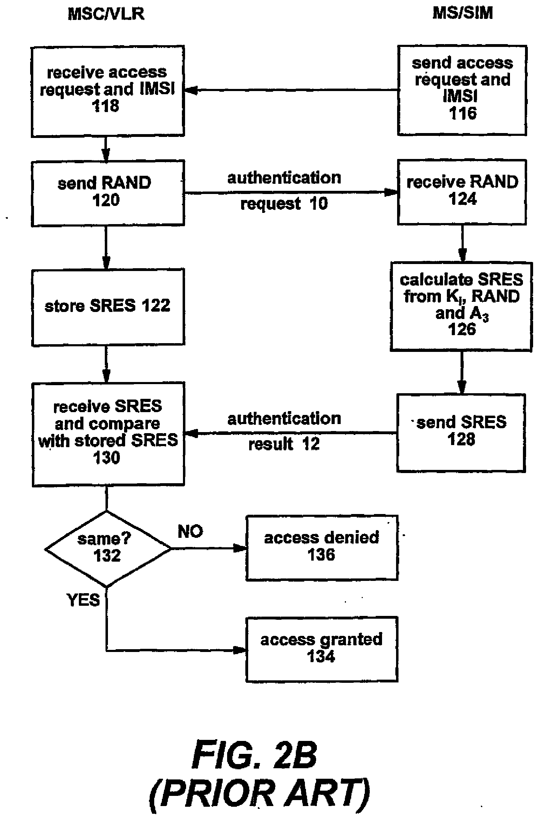

In the following it is referred to Fig. 1, 2A and 2B. The basic structure of a GSM system is shown in Fig. 1. The GSM standard also specifies the process of authenticating the user to the network. This process is illustrated in Fig. 2.

Referring now to Fig. 1, there is a home location register (HLR) storing information of all the subscribers to a network. The subscriber data contain information of the services to which the subscriber may have access and the current location of the subscriber. Connected to the HLR are a number of visitor location registersVLR1, VLR2, etc. Each VLR is attached to or integrated in a mobile switching centre MSC. The MSC is connected to a base station controller (BSC). The BSC serves a number of cells, each having a transceiver station (BTS). The BTS communicates with a mobile station (MS) via radio connections. An authentication centre AuC is connected to the HLR. The AuC handles the authentication of the subscriber to the network as will be explained in the following.

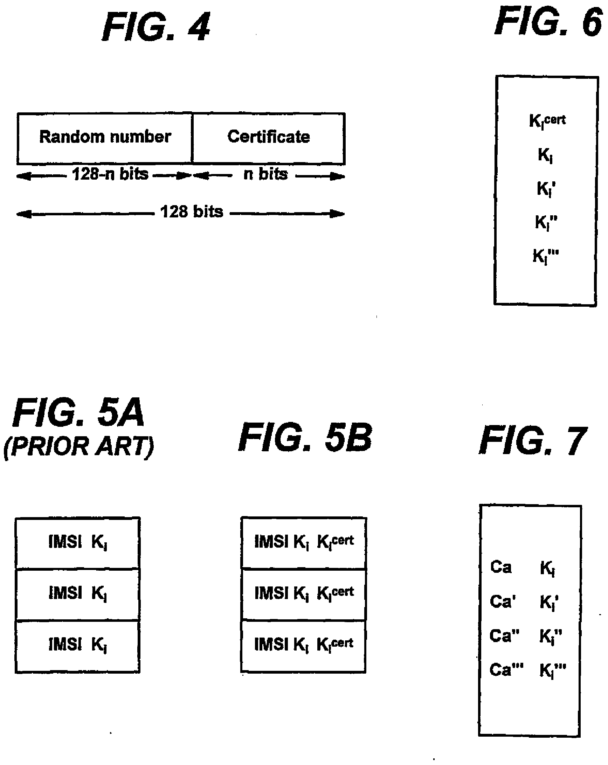

Referring now to Fig. 2A and Fig.1, the visited Mobile Service Switching Centre(MSC)/Visitors Location Register (VLR) sends parameters including the International Mobile Subscriber Identity (IMSI) to the Authentication Centre (AuC) and demands authentication parameters (step 106). The authentication centre is linked to a Home Location Register (HLR) of the subscriber. When a subscription is started, a secret number called an authentication key (Kᵢ) is allocated to the mobile subscriber together with the IMSI. The AuC comprises a database 32 which stores the authentication key Kᵢ for each mobile subscriber in the GSM network as is illustrated in Fig. 5A. The key Kᵢ is unique to the subscriber. It is shared only by the subscriber's SIM card and the authentication centre which serves the subscriber's home network. The key Kᵢ is stored on the SIM in a very protected way: it is not possible to retrieve the key Kᵢ from the SIM. The Kᵢ of the mobile subscriber can be retrieved from database 32 using the IMSI of the subscriber as an index. The AuC is further provided with means for calculating authentication responses 36 including an authentication algorithm A₃. The GSM system further specifies the size of the random input parameter RAND (128 bits) and of the output parameter SRES (32 bits). Kᵢ may have any format and length. The authentication algorithm A₃ is provided by the network operator and kept secret. A random generator 34 provides random numbers RAND having length of 128 bits (step 102). The key Kᵢ retrieved from database 32 and the random number RAND are used as input parameters in the authentication algorithm A₃ to calculate the signed response SRES (step 104). Authentication algorithm A₃ is a so-called one-way hash function. This ensures that the computation of the authentication response SRES (signed response) from the key Kᵢ and the random number RAND is easy, whereas the computation of the key Kᵢ knowing RAND and the authentication response SRES is as complex as possible. Even with the knowledge of several pairs of authentication challenges and responses (RAND, SRES) pertaining to the same subscriber, the computation remain highly complex. At the same time a ciphering key K_{c} is calculated using authentication key Kᵢ and random number RAND as input parameters in a ciphering algorithm A₈. The triplet comprising the random number RAND, the signed response SRES and the ciphering key K_{c} are sent from the AuC to the visited MSC/VLR in step 112. Such a triplet is used only once, i.e. for one communication and is then destroyed. Several triplets are calculated in advance for each subscriber at authentication centre AuC and are delivered to the MSC/VLR on request. Such a request contains the IMSI of subscriber and a demand for authentication parameters (step 106). The IMSI is used to retrieve parameters pertaining to the subscriber (step 110), and a number of triplets are transmitted from the authentication centre AuC to the visited MSC/VLR (step 112). A reserve of a few of the triplets are stored in the MSC/VLR (step 114). Referring now to Fig. 2B, upon access request of a mobile station (MS) in step 116 and 118 a triplet is retrieved from storage in the MSC/VLR using the IMSI. The value of SRES is stored in the MSC/VLR in step 122. The random number RAND is further transmitted from the MSC/VLR to the Mobile Station MS as a request for authentication (10) of the subscriber to the network in step 120 and 124. The SIM stores a copy of the key Kᵢ of the subscriber and the authentication algorithm A₃ for calculating the signed response SRES for verification.

The response SRES is accordingly calculated using Kᵢ and RAND as an input for authentication algorithm A₃ (step 126) and the response is transmitted in step 128 to the MSC/VLR as an authentication result (12). The MSC/VLR then compares the signed response SRES transmitted from the AuC and already stored in the MSC/VLR with the signed response SRES transmitted from the mobile station as an authentication result 12 in steps 130 and 132. If the two values for SRES are identical, access of the subscriber to the network is granted by the MSC/VLR in step 134. If the two values are not identical, access is denied in step 136.

However, the system described above is open to various attacks to gain access to the secret key Kᵢ. By repeatingly sending random number RAND as authentication challenges to the SIM and by monitoring the signed responses SRES the SIM will provide, it might be possible to derive the value of the secret key Kᵢ and possibly also the authentication algorithm A₃. This is called a multiple attack. Although the use of a one-way hash function for A₃ ensures a considerable level of complexity of the computation, the secret key Kᵢ may be discovered with a finite number of attacks. With the knowledge of both the secret Kᵢ and the authentication algorithm A₃ one or more clone SIM cards may be generated.

European patent application EP 1 005 244 describes a method of authenticating a connection between a user terminal and a network, in which an authorised authentication station issues an authentication challenge to the user terminal including verification information in the authentication challenge to indicate to the user terminal that the challenge originates from the authorised station.

It is an object of the present invention to provide a better, more secure, mechanism for authenticating the subscriber to the network. It is a further object of the present invention to nullify potential multiple attacks and the attempts to derive the value of the secret authentication key Kᵢ and thus to prevent or further reduce the production of clone SIM cards.

According to embodiments of the present invention, there is provided a method of authentication in a mobile communications network comprising: authentication of a subscriber identifying means to a network entity; and authentication of the network entity to the subscriber identifying means, wherein the subscriber identifying means receives an authentication challenge from the network entity; wherein the subscriber identifying means distinguishes authorised authentication challenges from unauthorised authentication challenges; characterised in that a response to said authentication challenge is given by the subscriber identifying means to authorised and unauthorised authentication challenges.

In this way authorised requests from the MSC/VLR can be distinguished from unauthorised requests from a potential attacker.

Preferably, the mutual authentication is achieved by authorising the authentication challenge from the network entity with a certificate, thus authenticating the network entity to the subscriber identifying means.

Preferably, the true authentication response to said authentication challenge is only given to a request carrying a valid certificate. Thus a disclosure of the secret authentication key following multiple attacks may be prevented. Preferably, said certificate includes a digital signature, a message authentication code (MAC) or a redundancy check code.

Preferably, the procedure of responding to said authentication challenge is the same for an authorised and an unauthorised authentication challenge and a first input parameter or algorithm is used for said procedure of responding to an authorised challenge and at least one further input parameter or algorithm, different from said first input parameter or algorithm, is used for said procedure of responding to an unauthorised challenge.

Thus the same procedure is applied to respond to valid and invalid authentication challenges. Even if the multiple attacks of the SIM are performed with help of a card reader no differences in the procedure to response to valid and invalid request could be detected. In this way a potential attacker would not be alerted that the attack is being nullified. This reduces further the chance for a potential attacker to discover the secret authentication key Kᵢ.

Preferably, data are stored on said subscriber identifying means indicating that said subscriber identifying means has been subject to a request for authentication with an invalid certificate.

In this way the network may have access to the information that an attempt has been made to challenge the subscriber identifying means in an unauthorised way and precautionary steps may be undertaken to prevent any further attempts.

According to an aspect of the present invention, there is provided a method of authentication using an information storage means, comprising the steps of: receiving a message comprising an authentication challenge and determining a characteristic of said message, calculating an authentication response based on said authentication challenge, an authentication input parameter and an authentication algorithm, said method being characterised by the steps of: determining from the determined characteristic that the message corresponds to an invalid authentication challenge; retrieving a fake authentication input parameter from a number of input parameters stored on said information storage means or a fake authentication algorithm from a number of algorithms stored on said information storage means in response to said characteristic; and responding to said invalid authentication challenge by using said retrieved fake authentication input parameter or said fake algorithm.

This provides a way to prevent disclosure of the secret authentication key Kᵢ and thus to prevent cloning of the SIM card.

Preferably, a sequence of messages comprising said authentication challenge and said certificate or authentication code has the appearance of randomness.

For authentication in a mobile communications network in accordance with the GSM standard, said authentication challenge preferably comprises a message of (128-n) bits and said certificate or authentication code comprises a message of n bits, such that a message comprising said authentication challenge and said certificate or authentication code is 128 bits long.

In this way a potential attacker may not recognise that the authentication challenges carries a certificate or authentication code. This helps further to nullify the attack because the message containing the authentication challenge RAND together with the certificate or authentication code has the same format and length than an authentication challenge according to the conventional GSM standard.

According to another aspect of the present invention, there is provided an authentication centre for a mobile communications network according to claim 10. Further aspects of the authentication centre could include: a database storing: i) an authentication algorithm and at least two different secret first input parameters; or ii) a secret first input parameter and at least two different authentication algorithms for calculating authentication responses; a source for providing second input parameters for calculating said authentication responses; means for: i) determining characteristics of said second input parameters; or ii) providing authentication codes; means for assigning one of said at least two secret first input parameters or authentication algorithms to said characteristics or said authentication codes in a predetermined way; means for retrieving the assigned first input parameter or authentication algorithm from said database; and means for calculating said authentication responses using said assigned first input parameter or authentication algorithm.

In this way the known mechanisms for authentication only require minor modifications to achieve mutual authentication according to one aspect of the present invention. The same principal and components in an extended form are used, such as in the well-known GSM authentication process.

According to embodiments of the present invention, there is provided an information storage means for authentication, adapted for distinguishing authorised and unauthorised requests for authentication characterised in that said information storage means responds to said authorised and said unauthorised authentication requests with an authentication response.

By responding differently to authorised and unauthorised authentication challenges the chance for discovering the secret authentication input parameter or key Kᵢ in a multiple attack are substantially reduced.

Preferably said authentication requests comprising authentication challenges carry certificates for authorising said authentication challenges and the validity of said certificates can be checked by calculation of said certificates from a certifying key and certifying algorithm stored on said information storage means using said authentication challenges as input parameters and comparison of calculated and received certificates.

In this way the same procedures and methods are used for authorising said authentication challenge itself. Only minor modifications have to be applied to the subscriber identifying means and known technology may be used.

Preferably said information storage means adapted for storing a first authentication input parameter or algorithm for use in a procedure of responding to authorised requests for authentication and further adapted for storing at least another authentication input parameter or algorithm for use in a procedure of responding to unauthorised requests.

In this way the same procedure is used for calculating the response to a valid and an invalid authentication challenge and therefore no possibility for a potential attacker is provided to distinguish an authentication challenge with valid certificate from one with an invalid certificate.

According to another aspect of the present invention, there is provided an information storage means for authentication, comprising: means for calculating authentication responses to received authentication challenges using said challenges, an authentication input parameter and an authentication algorithm stored on said information storage means; said information storage means being characterised by: means for: i) determining characteristics of said authentication challenges; or ii) determining characteristics of received authentication codes; means for storing: i) an authentication algorithm and at least two secret authentication input parameters; or ii) a secret authentication input parameters and at least two authentication algorithms means for determining predetermined assignments of said characteristics to said at least two authentication input parameters or algorithms; and means for retrieving the assigned authentication input parameters or algorithms for a particular characteristic or authentication code and using said assigned authentication input parameter or algorithm for calculating said authentication responses.

In this way the possibility of the detection of the secret authentication key or keys is reduced.

Preferably in a mobile communications network according to the GSM standard, a received message comprising said authentication challenge and said certificate or authentication code has the same appearance as an authentication challenge according to the GSM standard.

In this way a potential attacker may not distinguish an authorised authentication challenge according to this aspect of the present invention from an authentication challenge according to the conventional GSM standard and the potential attacker would not be alerted that the attack is nullified.

According to another aspect of the present invention, there is provided a subscriber identifying means for authentication in a mobile communications network, adapted for distinguishing a genuine authentication challenge as transmitted by said network from a false authentication challenge, characterised in that said subscriber identifying means is further adapted for storing data indicating that said subscriber identifying means has been subject to false authentication challenges.

In this way a false authentication challenge by a potential attacker is detected and the network may be notified of the false attack and actions to prevent further attacks or misuse may be started.

According to yet another aspect of the present invention, there is provided a method of authentication in a mobile communications network, wherein a network entity transmits an authentication challenge to a subscriber identifying means and generates an authentication response to said challenge, wherein said subscriber identifying means generates an authentication response to said received challenge and transmitting said response to said network entity, wherein said network entity compares the authentication response generated by said network entity to the authentication response provided by said subscriber identifying means, said method being characterised by the steps of: generating said authentication responses using a variable external input parameter available to said network entity and said subscriber identifying means, and calculating said authentication response in response thereto.

Further aspects and advantages of the invention will be apparent from the following, in which embodiments of the invention will now be described, by way of example only, with reference to the accompanying drawings in which:
Figure 1 is a general outline of the structure of a mobile communications network;
Figure 2A is a flowchart diagram showing the steps between the authentication centre AuC and the visited MSC/VLR in the authentication procedure according to the GSM standard (prior art);
Figure 2B is a flowchart diagram showing the steps between the visited MSC/VLR and the mobile station including the SIM card in the authentication procedure according to the GSM standard (prior art);
Figure 3A is a flowchart diagram showing the steps between the authentication centre AuC and the visited MSC/VLR in the mutual authentication procedure according to one embodiment of the present invention;
Figures 3B and 3C are flowchart diagrams showing the steps between the authentication centre AuC and, the mobile station including the SIM card in the mutual authentication procedure according to one embodiment of the present invention;
Figure 4 is an outline of the random number RAND and the certificate according to one embodiment of the present invention;
Figure 5A shows the database content for retrieving the authentication key in the authentication centre AuC (prior art);
Figure 5B shows the database content for retrieving the authentication key and the certifying key in the authentication centre AuC according to one embodiment of the present invention;
Figure 6 shows the storing of the certifying key and of different authentication keys in the SIM for use to response to authorised and unauthorised authentication challenges according to one embodiment of the present invention;
Figure 7 shows the storing of authentication codes and of authentication keys and their assignment in the SIM for use to respond to authentication requests comprising an authentication challenge and an authentication code according to a second embodiment of the present invention.

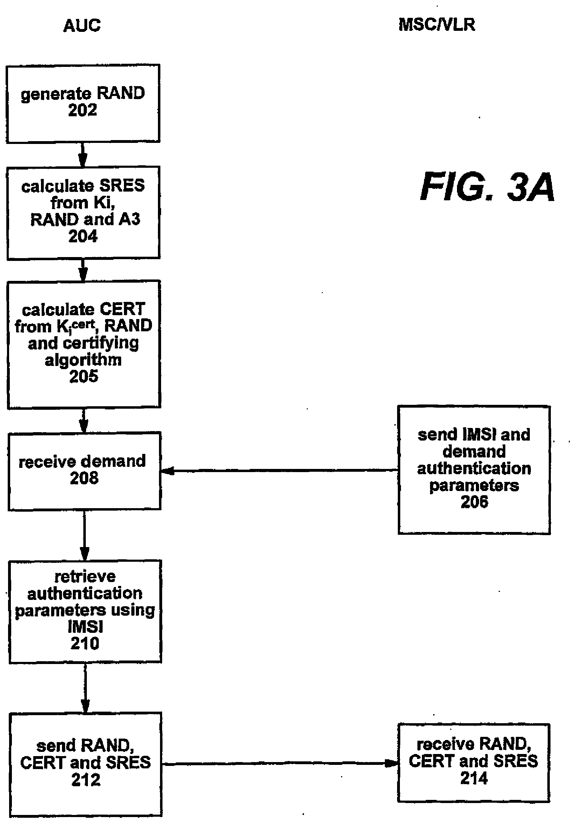

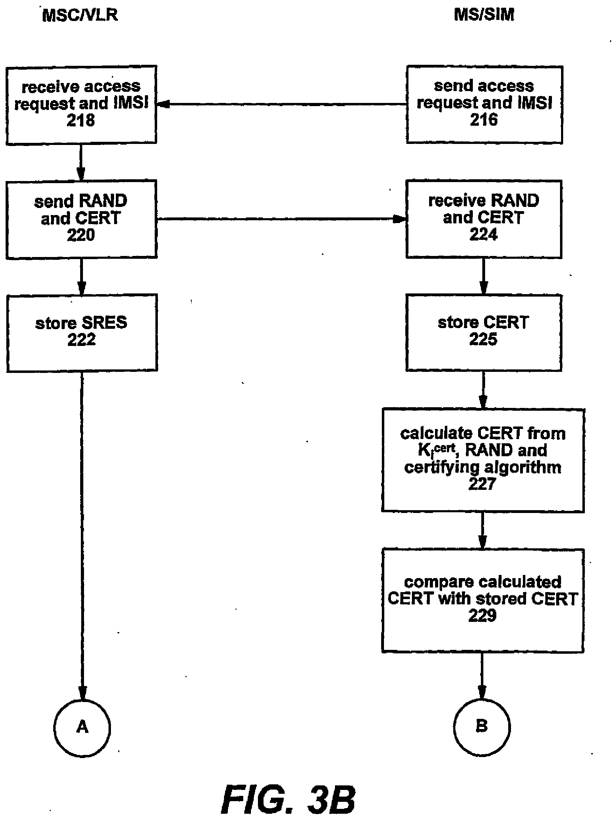

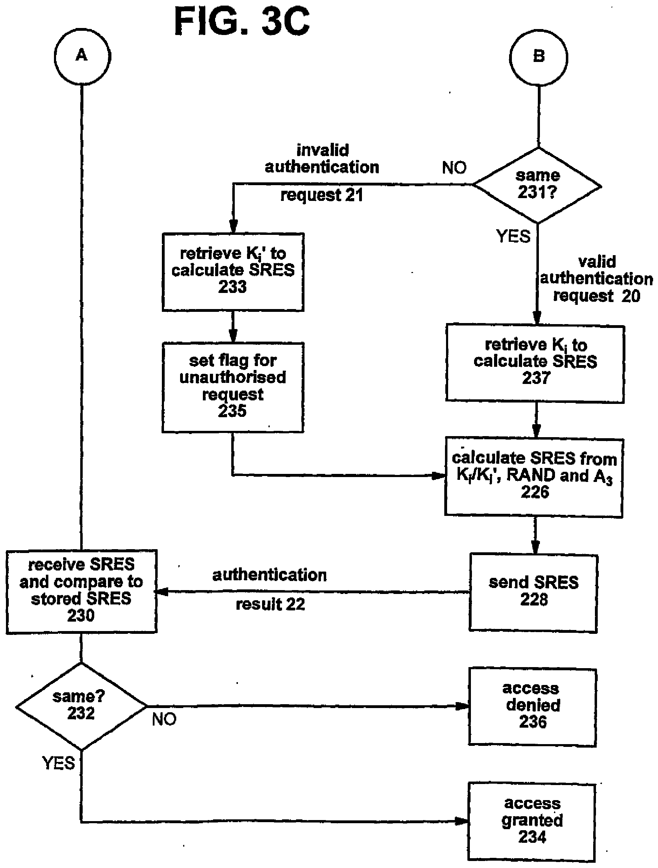

Figures 3A, B and C show the procedure of mutual authentication according to one embodiment of the present invention. Referring now to Fig. 3A, the steps of sending a demand of authentication parameters and the IMSI from the MSC/VLR to the authentication centre AuC (step 206) and step 202 and 204 of generating RAND and calculating authentication response are similar as steps 102,104,106 shown in Figure 2A and described above. However, the random number RAND used in this embodiment of the present invention is shorter than 128 bits. At subscription time, a second secret number called a certifying key Kᵢ^{cert} is allocated to the subscriber, together with the IMSI and the authentication key Kᵢ. The certificate key Kᵢ^{cert} is stored in database 32 and can be retrieved together with Kᵢ with IMSI as an index. Authentication algorithm A₃ is used to calculate SRES from RAND and Kᵢ in step 204. A certifying algorithm is used to calculate a certificate CERT from RAND and Kᵢ^{cert} in step 205. RAND, CERT and SRES are transmitted from authentication centre AuC to MSC/VLR on demand in step 212 and 214. Referring now to Fig. 3B, upon access request from mobile station MS (step 116), SRES is stored in step 222 in the visited MSC/VL and RAND is transmitted together with certificate CERT in one message from the MSC/VLR to the mobile station in step 220 and 224.

In contrast to the prior art and common GSM authentication procedure, where a 128 bit random number RAND is used, the random number RAND according to the described embodiment of the present invention is n bits shorter than 128 bits. n bits are reserved for the certificate CERT. The certifying algorithm, the certificate key Kᵢ^{cert} and the random number RAND are chosen to match these requirements. As a result the authentication request comprising the authentication challenge RAND the certificate CERT is 128 bits long. In this way the sequence of messages comprising RAND and CERT as transmitted from MSC/VLR to the mobile station MS would have the appearance of randomness and could not be distinguished from prior art 128 bit random number RAND by an unauthorised attacker. A set of random number RAND and certificate CERT is illustrated in Fig. 4 as an example. However, it is appreciated that the certificate CERT may be located anywhere within the sequence of messages comprising RAND and CERT and is not restricted to a location at the end of the sequence. The certificate may for example be included in the sequence while being split into two or more portions, may be distributed in various manners, or may be coded in the random number RAND according to a predetermined procedure. The SIM connected to mobile station MS is provided with the same certifying algorithm and certificate key Kᵢ^{cert} and is thus able to check the message containing the random number RAND and certificate CERT for authentication. The SIM stores the transmitted CERT in step 225. In step 227 the SIM calculates CERT using the transmitted random number RAND and the key Kᵢ^{cert} and certifying algorithm stored in the SIM memory. Subsequently, the stored and the calculate values of CERT are compared (step 229). Referring now to Fig. 3C, if the two values are identical, it is ensured that the authentication challenge is valid and assumed that it was provided by the MSC/VLR. In this case the SIM now continues to respond to the authentication challenge by calculating SRES from Kᵢ and RAND in step 237 and 226 as explained before. If the two values of CERT are not identical, an invalid authentication challenge 21 is detected. In order to provide protection against multiple challenge attacks, it is not sufficient to provide an error message or no response from the SIM card if the two values of CERT are not identical, i.e. an invalid authentication challenge is detected. This would provide potential attackers with a hint that the challenges RAND are not truly random.

In case of an invalid authentication challenge, the SIM uses a second, fake authentication key Kᵢ' to calculate a fake authentication response SRES 233 (step 233 and 226). This second key Kᵢ' is also stored in the memory of the SIM. In both cases, i.e. a valid and invalid authentication challenge, the resulting SRES is transmitted to the MSC/VLR as the authentication result 22 in steps 228 and 230. The procedure of comparing the stored authentication result SRES as received from authentication centre AuC with SRES received from the mobile station and granting or denying access in steps 232, 234 and 236 are the same as in steps 132,134 and 136 of Fig. 2.

In case an invalid authentication challenge 21 is detected, a flag is set on the SIM indicating that an unauthorised authentication challenge has been detected (step 235).

As explained above, the SIM card returns an authentication response for every challenge, a valid and thus authorised authentication challenge 20 and also an invalid i.e., unauthorised, authentication challenge 21. To further enhance the security provided, it is important that the system performs the same procedure as a response for valid and invalid authentication challenges. In this way a potential attacker would not be able to detect any differences if the SIM card is measured in a card reader or the like. Thus, no hint is given to the potential attacker whether the authentication challenge is valid or not. Otherwise the potential attacker may discover the certifying key Kᵢ^{cert} in a first series of multiple attacks and may continue challenging the SIM using the correct certificate in a second series of attacks in order to discover the authentication key Kᵢ. According to the above-described embodiment of the present invention, however, no hint is given that the attempts are being nullified and that the responses to invalid authentication challenges are meaningless. This method enhances further the security of the authentication system. A potential attacker may well derive the second authentication key Kᵢ', but this is of no use in generating a clone SIM card.

Whilst in the above-described embodiment the method of authorising the authentication challenge is described as a certifying algorithm with a secret key Kᵢ^{cert} as an input parameter, i.e. an authorisation according to the message authentication code (MAC) method, it is appreciated that other possibilities to authorise the authentication challenge like, for example, digital signature or redundancy check codes can be used. By adjusting the length of the keys Kᵢ, Kᵢ^{cert}, of the random number RAND and the certificate CERT it is even possible to use one of the existing GSM algorithms stored on the SIM, for example A₃, as a certifying algorithm. However, it is preferred that the length and appearance of a message containing the authentication challenge RAND and the certificate is the same as for an authentication challenge according to the prior art.

It is appreciated that even other possibilities for authorising the authentication challenge can be used: For example the random number RAND generated by the authentication centre AuC is provided with a predetermined code. Subsequently the message comprising RAND and the code is encrypted with a secret key. A sequence of these encrypted messages would again have the appearance of randomness and could be adjusted to have 128 bit length of prior art authentication challenges, in order not to give a hint to a potential attacker that the authentication challenges carry authorisation certificates. The encrypted message is then transmitted via the visited MSC/VLR to the mobile station and its SIM. The SIM would be provided with the same secret key to decrypt the message. In this way the predetermined code can be checked by the SIM for authorisation of the random number authentication challenge RAND.

Yet another possibility to authorise the authentication challenge is to provide the authentication challenge RAND with a digital signature. The message comprising the random number RAND and the digital signature may be encrypted using the authentication key Kᵢ. Again the ciphering algorithm for encryption of the message and the length of the random number RAND and the digital signature have to be adjusted such that the entire message to be transmitted from the visiting MSC/VLR has the length of the usual authentication challenge and the appearance of randomness. The SIM would be provided with means for decryption of the message and to verify the digital signature.

Moreover, it is appreciated that more than one valid key Kᵢ and/or more than one fake key Kᵢ' (i.e. Kᵢ", Kᵢ'''...) can be stored on the SIM card and can be used to calculate the response for invalid authentication challenges. The different valid keys Kᵢ or fake keys Kᵢ', Kᵢ", etc may, for example, be used alternately if a valid or invalid authentication challenge is detected. Alternatively, one valid or fake key may be selected according to a predetermined selection procedure which may, for example, be based on the random number RAND, the certificate CERT or an external variable parameter.

It if further appreciated that only one authentication key Kᵢ is used, but more than one authentication algorithms A₃, A₃', A₃",. rather than more than one authentication key Kᵢ are used in the authentication method described.

Whilst in the above-described embodiment the SIM card responds to authentication challenges by performing the same procedure but using an invalid "fake" authentication key or algorithm, it is appreciated that the SIM card may not respond to unauthorised and thus false authentication challenges. In this case the SIM card stores data indicating that an false challenge is detected and consequently the SIM card will not respond to any further authentication challenges by transmitting an authentication response SRES. In this way the possibility of misuse of the SIM card is further reduced.

In a second embodiment of the present invention the authentication centre AuC stores a number of authentication codes Ca. In this embodiment when a subscription is started a number of authentication keys Kᵢ are allocated to the mobile subscriber. There is one authentication key Kᵢ assigned to each possible authentication code for each subscriber in the GSM network.

The database 32 of the authentication centre AuC is further provided with means for randomly choosing or selecting in another way one of the authentication codes. After choosing one of the authentication codes, the AuC retrieves the authentication keys Kᵢ assigned to the chosen authentication code and the authentication centre generates a random number RAND as an authentication challenge. The authentication response SRES is then calculated from the random number RAND and the assigned authentication key Kᵢ fed into an authentication algorithm A₃ as described before. The AuC then sends a message comprising the random number RAND, the authentication code Ca and the authentication response SRES. The random number RAND and the authentication code Ca is sent to the visited MSC/VLR and further transmitted to the mobile station as an authentication request. Again a sequence of messages containing RAND and Ca should have the appearance of randomness in order not to alert a potential attacker. In the simplest case the authentication code might for example consist of a 1 bit message with is stored in a predetermined place within a 127 bit random number RAND, such that the message comprising RAND and Ca is the common 128 bit format for authentication challenges according to the GSM standard. In case that Ca is 0 or 1, there is assigned a first authentication key Kᵢ or a second key Kᵢ', respectively, for use in calculating the authentication response SRES.

The SIM card is also provided with the authentication codes, keys and their predetermined assignments as illustrated in Figure 7. The SIM card is provided with information identifying which region of the received authentication request the authentication code Ca is stored. On reception of an authentication challenge from the visited MSC/VLR the SIM card reads the Ca and retrieves the authentication key Kᵢ assigned to the received authentication code Ca from its memory and calculates an authentication response SRES from this assigned authentication key Kᵢ and the received random number RAND. Again SRES is sent as an authentication result to the visited MSC/VLR and there compared to the SRES as received from the AuC. Access is granted if the two authentication results are identical, access is denied if they are not identical. In this way the SIM card is protected against multiple attacks, because it would not be possible to derive the authentication key Kᵢ from challenging the SIM with random number RAND according to the GSM standard and monitoring the authentication responses SRES.

Whilst in the above described embodiment the use of authentication codes are described in response to which one authentication key is chosen, it is appreciated that alternatively a characteristic of the authentication challenge itself may be used. For example a checksum or a cyclic redundancy code may be derived from the random number RAND or portions thereof to determine which authentication key is used. Another possibility is that a portion of predetermined length and position of the authentication challenge itself, for example, the last two bits, determine which authentication key is used. It is further appreciated that one of a number of different authentication algorithms may be used rather than, or in addition, selecting one of a number of different authentication keys.

Whilst in the above-described embodiment an authentication key or algorithm assigned to a received authentication code or a characteristic derived from the authentication challenge is used to generate an authentication response, it is appreciated that alternatively an external variable input parameter may be used to select an authentication key or algorithm. An example for such an external variable parameter is for example the date or a parameter derivable from the TMSI (Temporary Mobile Subscriber Identity) according to a predetermined algorithm.

Whilst in the above-described embodiments an authentication code or characteristic derivable from the authentication challenge is used to select in a predetermined way an authentication key or algorithm, it is appreciated that either the network (i.e. the AuC) or the SIM card may select one of a number of authentication keys or algorithms and respond by generating SRES using this selected key or algorithm. In this case both the AuC and the SIM card are provided with more than one keys or algorithms. Whereas the AuC or the SIM selects one of these keys or algorithms, the according other party (i.e. the SIM card or the AuC) provides more than one authentication responses SRES. The authentication procedure is successful and thus access for the mobile station carrying the SIM is granted if the SRES generating the selected key or algorithms is amongst the number of authentication responses SRES provided by the other party.

It is appreciated that instead of using one authentication algorithm and more than one authentication key alternatively more than one authentication algorithm and one authentication key or more than one authentication algorithm and more than one authentication key may be used.

Whilst in the above-described embodiments an authentication algorithms A₃ according to the GSM standard is used to calculate the signed response SRES, it is appreciated that other authentication algorithms may be used.

Whilst in the above-described embodiments a number of the authentication processing functions on the network side are carried out in the MSC/VLR, one or more of the processing functions may be carried out elsewhere, for example in a base station.

Whilst in the above-described embodiments the method and system of authentication is for authenticating a network entity in the form of a network operator as described in the framework of the GSM standard, it is appreciated that the method and system may also be adapted in other mobile communication systems like for example PCS and for other authentication procedures like the WS and the S scheme. The method and system may also be used for authenticating network entities such as virtual network operators, service providers, etc. The method and system may also be adapted in authentication systems other than mobile communication systems.

Whilst in the above-described embodiments a SIM card is described, it is appreciated that subscriber identifying means or information storage means other than a SIM card may be used.

## Claims

1. A method of authentication in a mobile communications network using an information storage means (32), comprising the steps of:
receiving a message comprising an authentication challenge (RAND) and
determining a characteristic (CERT) of said message,
calculating an authentication response (CERT) based on said authentication challenge (RAND), an authentication input parameter (Ki cert) and an authentication algorithm (A3, A3', A3"),
said method being **characterised by** the steps of:
determining from the determined characteristic (CERT) that the message corresponds to an invalid authentication challenge (RAND),
retrieving a fake authentication input parameter (Ki') from a number of input parameters (Ki cert, Ki') stored on said information storage means (32) or a fake authentication algorithm from a number of authentication algorithms stored on said information storage means (32) in response to said determined characteristic (CERT); and
responding to said invalid authentication challenge (RAND) by using said retrieved fake authentication input parameter (Ki cert, Ki') or said fake authentication algorithm.

2. A method of authentication according to claim 1, wherein said characteristic (CERT) of said message is derivable from said authentication challenge (RAND).

3. A method of authentication according to claim 2, wherein said characteristic (CERT) is determined using checksums, cyclic redundancy codes or by portions of predetermined length or predetermined position.

4. A method of authentication according to claim 1, wherein said message includes said authentication challenge (RAND) and an authentication code (Ca) and said characteristic of said message is included in said authentication code.

5. A method of authentication according to claim 4, comprising the step of selecting one authentication code from a number of different authentication codes, whereby each authentication code is assigned to a particular input parameter or algorithm.

6. A method of authentication according to claim 5, wherein said authentication codes, input parameters or algorithms and assignments of said codes to said input parameter or algorithms are stored on said information storage means.

7. A method of authentication according to any preceding claim, wherein a sequence of messages comprising said authentication challenges and said certificates or authentication codes have the appearance of randomness.

8. A method of authentication according to any preceding claim for authentication in a mobile communications network, said communications network being in accordance with the GSM standard, wherein said authentication challenge comprises a message of (128-n) bits and said certificate or authentication code comprises a message of n bits, such that a message comprising said authentication challenge and said certificate or authentication codes is 128 bits long.

9. A method of authentication according to any preceding claim for authentication in a mobile communications network, the method further comprising the steps of:
- storing data indicating that the subscriber identifying means has been subject to invalid authentication challenge.

10. An authentication centre (AuC) for a mobile communications network, comprising means for executing all the steps of the method according to claim 1.

## Patentansprüche

1. Authentifizierungsverfahren in einem Mobilkommunikationsnetz unter Verwendung einer Informationsspeichereinrichtung (32), das die folgenden Schritte umfasst:
Empfangen einer Nachricht, die eine Authentifizierungsfrage (RAND) enthält, und
Bestimmen einer Eigenschaft (CERT) der Nachricht,
Berechnen einer Authentifizierungsantwort (CERT) auf der Basis der Authentifizierungsfrage (RAND), eines Authentifizierungs-Eingangsparameters (Ki cert) und eines Authentifizierungsalgorithmus (A3, A3', A3"),
wobei das Verfahren durch die folgenden Schritte gekennzeichnet ist:
Bestimmen anhand der bestimmten Eigenschaft (CERT), dass die Nachricht einer ungültigen Authentifizierungsfrage (RAND) entspricht,
Abrufen eines gefälschten Authentifizierungs-Eingangsparameters (Ki') von einer Anzahl von Eingangsparametern (Ki cert, Ki'), die auf der Informationsspeichereinrichtung (32) gespeichert sind, oder eines gefälschten Authentifizierungsalgorithmus von einer Anzahl von Authentifizierungsalgorithmen, die auf der Informationsspeichereinrichtung (32) gespeichert sind, als Reaktion auf die bestimmte Eigenschaft (CERT); und
Antworten auf die ungültige Authentifizierungsfrage (RAND) durch Verwenden des abgerufenen gefälschten Authentifizierungs-Eingangsparameters (Ki cert, Ki') oder des gefälschten Authentifizierungsalgorithmus.

2. Authentifizierungsverfahren nach Anspruch 1, wobei die Eigenschaft (CERT) der Nachricht von der Authentifizierungsfrage (RAND) ableitbar ist.

3. Authentifizierungsverfahren nach Anspruch 2, wobei die Eigenschaft (CERT) durch Verwenden von Prüfsummen, von zyklischen Redundanzcodes oder durch Teile von vorbestimmter Länge oder vorbestimmter Position bestimmt wird.

4. Authentifizierungsverfahren nach Anspruch 1, wobei die Nachricht die Authentifizierungsfrage (RAND) und einen Authentifizierungscode (Ca) enthält, und die Eigenschaft der Nachricht in dem Authentifizierungscode enthalten ist.

5. Authentifizierungsverfahren nach Anspruch 4, das den Schritt des Auswählens eines Authentifizierungscodes von einer Anzahl von unterschiedlichen Authentifizierungscodes umfasst, wodurch jeder Authentifizierungscode einem bestimmten Eingangsparameter oder Algorithmus zugewiesen wird.

6. Authentifizierungsverfahren nach Anspruch 5, wobei die Authentifizierungscodes, Eingangsparameter oder Algorithmen und Zuweisungen der Codes zu dem Eingangsparameter oder den Algorithmen auf der Informationsspeichereinrichtung (32) gespeichert werden.

7. Authentifizierungsverfahren nach einem vorhergehenden Anspruch, wobei eine Folge von Nachrichten, welche die Authentifizierungsfragen und die Zertifikate oder Authentifizierungscodes enthalten, den Anschein von Zufälligkeit hat.

8. Authentifizierungsverfahren nach einem vorhergehenden Anspruch für Authentifizierung in einem Mobilkommunikationsnetz, wobei das Kommunikationsnetz im Einklang mit dem GSM-Standard ist, wobei die Authentifizierungsfrage eine Nachricht von (128-n) Bits enthält, und das Zertifikat oder der Authentifizierungscode eine Nachricht von n Bits enthält, so dass eine Nachricht, welche die Authentifizierungsfrage sowie das Zertifikat oder den Authentifizierungscode enthält, eine Länge von 128 Bits hat.

9. Authentifizierungsverfahren nach einem vorhergehenden Anspruch für Authentifizierung in einem Mobilkommunikationsnetz, wobei das Verfahren ferner die folgenden Schritte umfasst:
- Speichern von Daten, die angeben, dass die Teilnehmeridentifikationseinrichtung einer ungültigen Authentifizierungsfrage ausgesetzt worden ist.

10. Authentifizierungszentrum (AuC) für ein Mobilkommunikationsnetz, das Einrichtungen zum Ausführen aller Schritte des Verfahrens nach Anspruch 1 einschließt.

## Revendications

1. Procédé d'authentification dans un réseau de communications mobile utilisant un moyen de stockage d'informations (32), comprenant les étapes consistant à :
recevoir un message comprenant un défi d'authentification (RAND), et
déterminer une caractéristique (CERT) dudit message,
calculer une réponse d'authentification (CERT) sur la base dudit défi d'authentification (RAND), d'un paramètre d'entrée d'authentification (Ki cert) et d'un algorithme d'authentification (A3, A3', A3"),
ledit procédé étant **caractérisé par** les étapes consistant à :
déterminer à partir de la caractéristique déterminée (CERT) que le message correspond à un défi d'authentification invalide (RAND),
récupérer un faux paramètre d'entrée d'authentification (Ki') à partir d'un certain nombre de paramètres d'entrée (Ki cert, Ki') stockés sur ledit moyen de stockage d'informations (32) ou un faux algorithme d'authentification à partir d'un certain nombre d'algorithmes d'authentification stockés sur ledit moyen de stockage d'informations (32) en réponse à ladite caractéristique déterminée (CERT) ; et
répondre audit défi d'authentification invalide (RAND) en utilisant ledit faux paramètre d'entrée d'authentification récupéré (Ki cert, Ki') ou ledit faux algorithme d'authentification.

2. Procédé d'authentification selon la revendication 1, dans lequel ladite caractéristique (CERT) dudit message peut être dérivée dudit défi d'authentification (RAND).

3. Procédé d'authentification selon la revendication 2, dans lequel ladite caractéristique (CERT) est déterminée en utilisant des sommes de contrôle, des codes de redondance cyclique ou par des portions d'une longueur prédéterminée ou d'une position prédéterminée.

4. Procédé d'authentification selon la revendication 1, dans lequel ledit message comprend ledit défi d'authentification (RAND) et un code d'authentification (Ca) et ladite caractéristique dudit message est comprise dans ledit code d'authentification.

5. Procédé d'authentification selon la revendication 4, comprenant l'étape consistant à sélectionner un seul code d'authentification parmi un certain nombre de codes d'authentification différents, de sorte que chaque code d'authentification est attribué à un paramètre d'entrée ou un algorithme particulier.

6. Procédé d'authentification selon la revendication 5, dans lequel lesdits codes d'authentification, les paramètres d'entrée ou les algorithmes et attributions desdits codes audit paramètre d'entrée ou aux algorithmes sont stockés sur ledit moyen de stockage d'informations (32).

7. Procédé d'authentification selon l'une quelconque des revendications précédentes, dans lequel une séquence de messages comprenant lesdits défis d'authentification et lesdits certificats ou codes d'authentification se présente comme étant aléatoire.

8. Procédé d'authentification selon l'une quelconque des revendications précédentes pour une authentification dans un réseau de communications mobile, ledit réseau de communications étant conforme à la norme GSM, dans lequel ledit défi d'authentification bits, de sorte qu'un message comprenant ledit défi d'authentification et ledit certificat ou les codes d'authentification présente une longueur de 128 bits.

9. Procédé d'authentification selon l'une quelconque des revendications précédentes pour une authentification dans un réseau de communications mobile, le procédé comprenant en outre l'étape consistant à :
- stocker des données indiquant que le moyen d'identification d'abonné a été soumis à un défi d'authentification invalide.

10. Centre d'authentification (AuC) pour un réseau de communications mobile comprenant des moyens pour exécuter toutes les étapes du procédé selon la revendication 1.
